# EUROPEAN PATENT APPLICATION

(11) **EP 3 492 198 A1**
(43) Date of publication of application: **05.06.2019**
(21) Application number: 18209349.2
(22) Date of filing: 29.11.2018
(51) Int. Cl.: B22F 1/00, B22F 3/00, B22F 5/00, B22F 5/04, C22C 1/04, C22C 19/00, C22C 19/03, C22C 21/00, C22C 21/02, C23C 24/04, B33Y 10/00, B33Y 40/00, B22F 3/24

(54) **NON-EQUILIBRIUM ALLOY COLD SPRAY FEEDSTOCK POWDERS, MANUFACTURING PROCESSES UTILIZING THE SAME, AND ARTICLES PRODUCED THEREBY**

(30) Priority: 30.11.2017 US 201715827339
(71) Applicant: Honeywell International Inc., Morris Plains, NJ New Jersey 07950 (US)
(72) Inventor: CHIPKO, Paul, Morris Plains, NJ New Jersey 07950 (US); PIASCIK, James, Morris Plains, NJ New Jersey 07950 (US); KINGTON, Harry Lester, Morris Plains, NJ New Jersey 07950 (US); GREVING, Daniel, Morris Plains, NJ New Jersey 07950 (US); HINKE, Patrick, Morris Plains, NJ New Jersey 07950 (US); FRANCONI, Robert, Morris Plains, NJ New Jersey 07950 (US); JADIDIAN, Bahram, Morris Plains, NJ New Jersey 07950 (US)
(74) Representative: Sach, Greg Robert

(57) **Abstract**

Methods (10) for producing Non-Equilibrium Alloy (NEA) feedstock powders (42, 50) are disclosed, as are methods (10) for fabricating articles from such NEA feedstock powders utilizing Additive Manufacturing (AM) cold spray processes. In various embodiments, the method (10) includes the step or process obtaining (24) an NEA feedstock powder (42, 50), which is composed of an alloy matrix throughout which a first minority constituent is dispersed. The first minority constituent precipitates from the alloy matrix when the NEA feedstock powder (42, 50) is exposed to temperatures exceeding a critical temperature threshold (T_{CRITICAL}) for a predetermined time period. An AM cold spray process (18) is carried-out to produce a near-net article (68) from the NEA feedstock powder (42, 50), which is exposed to a maximum temperature (T_{SPRAY_MAX}) during the cold spray process. The near-net article (68) is then further processed (26) to yield a finished article. To substantially preserve the non-equilibrium state of the feedstock powder, T_{SPRAY_MAX} is maintained below T_{CRITICAL} through the cold spray process.

## Description

### TECHNICAL FIELD

The present disclosure relates generally to dynamic cold gas spray processes and, more particularly, to non-equilibrium alloy feedstock powders, cold spray-based processes for additively manufacturing articles with such feedstock powders, and articles produced utilizing such processes.

### ABBREVIATIONS

Abbreviations appearing less frequently in this document are defined upon initial usage, while abbreviations appearing with greater frequency are defined below.
Al-Aluminum;
AM-Additive Manufacturing:
DED-Direct Energy Deposition;
DMLS-Direct Metal Laser Sintering;
GTE-Gas Turbine Engine;
HIP-Host Isostatic Pressing;
NEA-Non-Equilibrium Alloy;
SEM-Scanning Electronic Microscope;
Wt%-Weight percent;
°C-degrees Celsius; and
°C/s-degrees Celsius per second.

### BACKGROUND

Aerospace components, such as GTE components and airborne valves, are commonly fabricated from alloy powders utilizing powder metallurgy processes. HIP processes, in particular, are often utilized to transform powder bodies into near-net shapes or articles, which are then subject to further processing to complete the desired GTE component. Depending upon the initially-selected alloy powder, it is not uncommon for HIP-based process flows to require a relatively lengthy series of steps including casting, cold compaction, can welding, the HIP process step itself, de-canning, extruding, upset forging, final forging, and machining. Each process steps adds duration, complexity, and tooling cost to the manufacturing process; and, in many instances, incrementally degrades the overall strength, ductility, and other desired properties of the alloy material. For at least these reasons, the aerospace industry has increasingly turned toward DMLS and other DED powder fusion processes for the additive manufacture of many GTE components.

During a generalized DMLS process, a laser or electron beam is scanned across selected regions of a metallic powder bed to fuse layers of metal powder and gradually build-up or compile a component on a layer-by-layer basis. After selected regions of a given metallic layer are fused in this manner, a new powder layer is then applied over the recently-fused layer utilizing a roller-based recoater system. This process of dispensing a metallic powder layer, fusing selected regions of the powder layer, and then applying a fresh metallic powder layer are repeated until completion of the component. As compared to more conventional powder metallurgy processes, such as HIP-based fabrication processes of the type previously described, DMLS fabrication processes generally require fewer processing steps and tooling requirements and, thus, can be carried-out with greater efficiency and at lower costs.

The foregoing benefits notwithstanding, DMLS and other DED powder fusion processes remain limited in multiple respects. For example, while more efficient than other legacy powder metallurgy fabrication techniques, DMLS processes can still be undesirably time consuming; current DMLS processes often require several hours to complete components of relatively modest volumes and complexity. Further, the components fabricated utilizing DMLS processes may have undesirably high porosities. DMLS processes also tend to modify powder microstructures due to the localized fusion temperatures involved. It can consequently be difficult, if not impractical to fabricate components from certain materials utilizing DMLS processes. In particular, DMLS processes may be poorly suited for producing components from certain non-equilibrium alloy powders (described below), while reliably maintaining or creating a desired microstructure throughout the component body; e.g., a microstructure that is substantially free of deleterious phases or participate growth, which can detract from the strength, ductility, and other desired properties of the completed component. As a still further drawback, DMLS and other DED processes often impose undesired limitations on maximum permissible size of the articles produced utilizing such processes.

There thus exists an ongoing demand for methods for fabricating engine components and other metallic articles, which overcome the limitations associated with conventional powder metallurgy manufacturing processes. Ideally, such methods would enable the fabrication of articles with a reduced number of process steps, with reduced tooling requirements, with minimal scrap loss, with relatively low porosities, with reduced constraints on article size, and at reduced manufacturing costs and manufacturing schedules. Further, it would be desirable for such methods to enable fabrication of articles from non-equilibrium alloy powders, while substantially maintaining the desired material properties and microstructure throughout the fabrication process. Embodiments of such methods are set-forth herein, as are other related methods and articles produced in accordance with such methods. Other desirable features and characteristics of embodiments of the present invention will become apparent from the subsequent Detailed Description and the appended Claims, taken in conjunction with the accompanying drawings and the foregoing Background.

### BRIEF SUMMARY

Methods for producing NEA feedstock powders utilized in AM cold spray processes are disclosed, as are methods for fabricating articles from such NEA feedstock powders utilizing computer-controlled, AM cold spray processes. In various embodiments, the method includes the step or process of purchasing, producing, or otherwise obtaining an NEA feedstock powder, which is composed of an alloy matrix throughout which a first minority constituent is dispersed. Due to the metastable or non-equilibrium state of the feedstock powder, the first minority constituent precipitates from the alloy matrix when the NEA feedstock powder is exposed to temperatures exceeding a critical temperature threshold (T_{CRITICAL}) for a predetermined time period. An AM cold spray process is carried-out to fabricate a near-net article from the NEA feedstock powder, which is exposed to a maximum temperature (T_{SPRAY_MAX}) during the cold spray process. The near-net article is then further processed to yield a finished article. To preserve the metastable or non-equilibrium state of the feedstock powder, T_{SPRAY_MAX} is maintained below T_{CRITICAL} through the cold spray process.

In other embodiments, the method includes the steps or processes of forming a molten alloy into a solid NEA body, such as an NEA ribbon or other bulk shape, utilizing a casting process having a cooling rate equal to or greater than approximately 1x10⁶ °C/s. After casting, the solid NEA body is mechanically converted into a NEA feedstock powder. An annealing process is then performed during which the feedstock powder is exposed to a maximum anneal temperature (T_{ANNEAL_MAX}) for a predetermined time period. The NEA feedstock powder is composed of an alloy matrix having a melt point (T_{ALLOY_MP}) and throughout which a first minority constituent is dispersed or distributed. The first minority constituent precipitates from the alloy matrix when the NEA feedstock powder is exposed to temperatures exceeding a critical temperature threshold T_{CRITICAL} for a predetermined time period. The NEA body is formulated such that T_{CRITICAL} is less than T_{ALLOY_MP} and greater than T_{ANNEAL_MAX}.

In yet further embodiments, the method includes the step or process of utilizing an AM cold spray process to fabricate a near-net article from a NEA feedstock powder having a melt point of T_{ALLOY_MP}. The NEA feedstock powder contains an aluminum alloy matrix and a non-trace amount of silicon contained in the aluminum alloy matrix and precipitating therefrom when the NEA feedstock powder is exposed to temperatures exceeding a critical temperature threshold (T_{CRITICAL}) for a predetermined time period. The near-net article is further annealed at a maximum annealing temperature (T_{ANNEAL}). The method is carried-out such that T_{ANNEAL} < T_{CRITICAL} < T_{ALLOY_MP}; and, perhaps, such that T_{ANNEAL_MAX} is greater than T_{CRITICAL} minus 150°C and less than T_{CRITICAL} minus 25°C. In certain embodiments, the method further comprises selecting the NEA feedstock powder to further contain a non-trace amount of iron, which is also present in the aluminum alloy matrix and which precipitates therefrom when the NEA feedstock powder is exposed to temperatures exceeding T_{CRITICAL} for the predetermined time period.

The foregoing summaries are provided by way of non-limiting example only. Various additional examples, aspects, and other features of embodiments of the present disclosure are described in more detail below.

### BRIEF DESCRIPTION OF THE DRAWINGS

At least one example of the present invention will hereinafter be described in conjunction with the following figures, wherein like numerals denote like elements, and:
FIG. 1 is a flowchart of an exemplary method for producing NEA feedstock powders and for fabricating articles from such NEA feedstock powders deposited utilizing computer-controlled, AM cold spray processes;
FIG. 2 is a schematic illustrating an exemplary planar flow casting process suitable for producing a solid NEA body or bulk shape (here, an NEA ribbon), which may be further processed into a NEA feedstock powder in accordance with the method of FIG. 1;
FIG. 3 is an SEM image of an NEA feedstock powder composed of flake-shaped particles, which may be produced by mechanically processing the NEA ribbon shown in FIG. 2 in an embodiment of the present disclosure; and
FIG. 4 is a schematic illustrating an exemplary AM cold spray process suitable for producing a near-net article, such as a partially-completed aerospace component, from the NEA feedstock powder produced in accordance with the method of FIG. 1.

For simplicity and clarity of illustration, descriptions and details of well-known features and techniques may be omitted to avoid unnecessarily obscuring the exemplary and non-limiting embodiments of the invention described in the subsequent Detailed Description. It should further be understood that features or elements appearing in the accompanying figures are not necessarily drawn to scale unless otherwise stated. For example, the dimensions of certain elements or regions in the figures may be exaggerated relative to other elements or regions to improve understanding of embodiments of the invention.

### DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description.

### DEFINITIONS

As appearing herein, the term "alloy" refers to a material composed predominately or exclusively of metallic constituents by weight percent (wt%). As further appearing herein, a "non-equilibrium alloy" or "NEA" is defined as a material containing an alloy matrix throughout which one or more minority constituents (metallic or non-metallic constituents present in quantities less than that of the alloy matrix, by wt%) are distributed. Further, the minority constitution(s) exhibit a tendency or propensity, as predicted by established thermodynamic principles, to precipitate from the matrix and agglomerate if the NEA material is heated above a critical temperature threshold (herein, "T_{CRITICAL}") for an extended period of time on the order of, for example, one minute. Thus, in essence, NEA materials exist in desired metastable states; and, if heated to undesirably high temperatures, the NEA materials will experience undesired precipitate growth detracting from the overall strength, ductility, and, perhaps, other desirable properties of the material. The value of T_{CRITICAL} will vary amongst embodiments depending upon alloy composition, but will generally be less than the melt point of the NEA material and, more specifically, the alloy matrix (herein, "T_{ALLOY_MP}"). In certain embodiments, T_{CRITICAL} will range from about 350°C to about 500°C or, perhaps, from about 400°C to about 450°C. In other embodiments, T_{CRITICAL} may be greater than or less than the aforementioned range.

### OVERVIEW

Methods for producing NEA feedstock powders for usage in cold spray processes are disclosed, as are methods for fabricating articles from NEA feedstock powders utilizing computer-controlled, AM cold spray processes. By virtue of the below-described rapid cool casting processes, the NEA feedstock powders are produced to natively contain desired microstructures, which are metastable in nature and desirably preserved throughout the remainder of the article fabrication process, to the extent practical. Therefore, in an effort to maintain the desired metastable microstructures of the NEA materials throughout the fabrication process, thermal loading of the NEA material is carefully regulated across all pertinent process stages and through the usage of AM cold spray processes in compiling or printing the desired component on a layer-by-layer basis. Accordingly, during a given processing stage, the maximum or peak processing temperatures to which the NEA materials are exposed can be limited to below T_{CRITICAL}, as may be the case during the AM cold spray process. In this manner, the desired metastable microstructures of the NEA material can be substantially preserved to enhance the strength, ductility, and other desired properties of the finished article.

By way of non-limiting example, embodiments of the below-described methods are well-suited for producing or fabricating components utilizing Al-based and nickel-based (Ni-based) NEA feedstock powders; that is, feedstock powders predominately composed of Al or Ni, by wt%. Al-based and Ni-based alloys are presently employed to fabricate certain aerospace articles, such as GTE components, utilizing fundamentally different manufacturing approaches. For example, in one common approach, GTE components (and, more generally, other aerospace and turbomachine components) can be suitably produced from Al-based alloys utilizing HIP-based fabrication techniques of the type previous described. However, as noted in the foregoing section entitled "BACKGROUND," such HIP-based fabrication techniques commonly require a relatively length series of process steps including casting, cold compaction, HIPing, extrusion, and forging, along with various intervening steps. Many, if not all of the aforementioned process steps require specialized tooling and add cost, complexity, and duration to the manufacturing process. Further, debits to material strength are often experienced at each stage of processing with the possible exception of forging, which may increase component strength in skin region of a metallic article, rather than through an article's bulk. Comparatively, the cold spray-based AM manufacturing processes described herein (when paired with the usage of the specialized NEA feedstock powders) can produce comparable aerospace components with enhanced properties at a small fraction of the cost (due, in substantial part, to decreased tooling requirements) and at abbreviated production schedules on the order of one or more days as opposed to weeks or months.

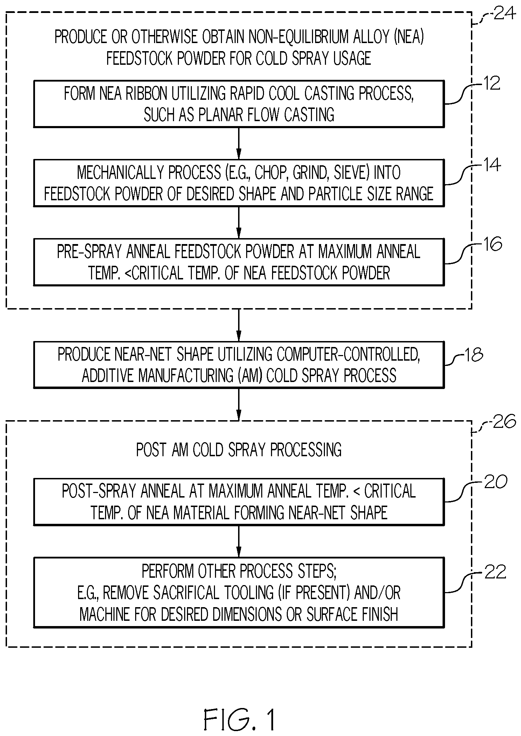

The cold spray-based AM manufacturing processes may provide other advantages in addition to those listed above. For example, embodiments of the below-described cold spray-based AM manufacturing process can produce highly dense articles have low porosities, such as porosities less than 1% by volume and, perhaps, less than 0.5% by volume. Furthermore, embodiments of the cold spray-based AM manufacturing process can also ease size constraints imposed by other conventional additive powder metallurgy fabrication techniques, such as DED powder fusion processes. Such attributes are highly desirable in the aerospace industry and can also benefit other industries in which metallic components or articles of manufacture are desirably fabricated from NEA materials of the type described herein. Exemplary processes for fabricating aerospace components, as well as various other types of metallic articles, utilizing such cold spray-based AM manufacturing processes are described below in conjunction with FIGs. 1-4.

### DESCRIPTION OF EXEMPLARY PROCESSES

Turning now to FIG. 1, an exemplary method **10** for fabricating NEA feedstock powders and for manufacturing articles from such NEA feedstock powders utilizing AM cold spray-based processes is presented. As can be seen, method **10** includes a number of sequentially-performed process steps identified as STEPS **12, 14, 16, 18, 20, 22.** STEPS **12, 14, 16** are carried-out as part of an overarching sub-process **24** (herein, "PROCESS BLOCK **24**"), while STEPS **20, 22** are carried-out as a part of an overarching sub-process **26** (herein, "PROCESS BLOCK **26**"). The steps illustrated in FIG. 1 and described below are provided by way of non-limiting example only. In alternative embodiments, additional process steps may be performed, certain steps may be omitted, and/or the illustrated steps may be performed in alternative sequences. For example, in alternative implementations of method **10,** only those steps performed in PROCESS BLOCK **24** may be carried-out to produce an FEA feedstock powder, which may then be commercially marketed or otherwise utilized. In other alternative implementations of method **10,** the steps set-forth within PROCESS BLOCK **24** may not be performed, in which case the entity performing STEP **18** (the below-described AM cold spray process) may obtain the desired NEA feedstock powder by purchase from a third party supplier. Other modifications are also possible, with any number of entities performing differing ones of STEPS **12, 14, 16, 18, 20, 22** depicted in FIG. 1.

Method **10** commences with obtaining the NEA feedstock powder for usage in the subsequently-performed AM cold spray process (PROCESS BLOCK **24**). As indicated above, the NEA feedstock powder may be obtained by purchase from a third party supplier or by independent production; that is, production by the same entity performing STEP **18** of method **10** (the cold spray process itself) and, perhaps, one or more of post-spray STEPS **18, 20, 22.** Regardless of the particular entity or entities responsible for feedstock powder production, the NEA feedstock powder can be produced utilizing the following generalized process steps, as set-forth in accordance with an exemplary embodiment of the present disclosure. First, as indicated in FIG. 1 at STEP **12** of method **10,** a molten source material may be converted into a desired solid form utilizing, for example, a rapid cooling casting process. As appearing herein, a casting process is considered "rapid cooling" when having a cooling rate equal to or greater than 1x10⁶ °C/s. Notably, this cooling rate exceeds those achievable utilizing many conventional processes including atomization processes of the type traditionally employed to produce cold spray feedstock powders. Indeed, such atomization processes often achieve, at most, cooling rates approximately ten times less rapid the above-mentioned threshold (e.g., cooling rates equal to or less than approximately 1x10⁵ °C/s) and approximately one hundred or more times less rapid than the below-described planar flow casting process, which is advantageously (although not necessarily) utilized to produce bulk NEA material in embodiments of method **10.**

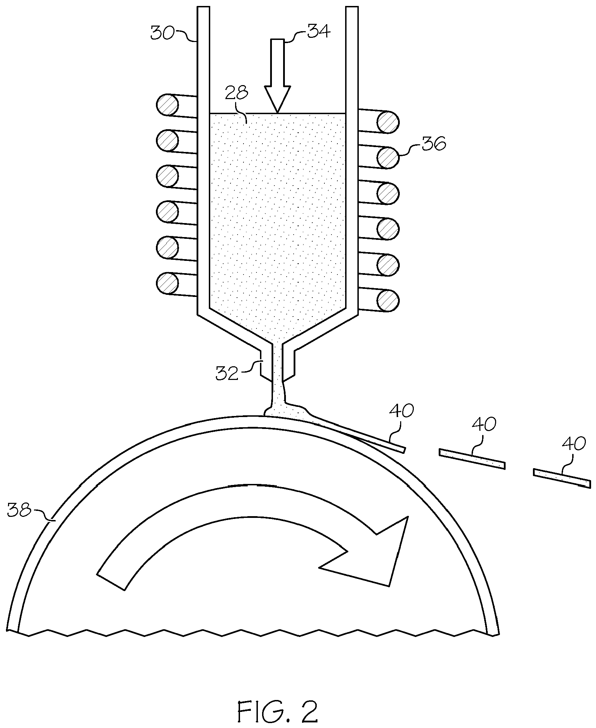

In one approach, molten source material is formed into a desired solid shape utilizing a planar flow casting process (also referred to as a "melt-spin process") during STEP **12** of method **10.** An example of such a planar flow casting process is schematically illustrated in FIG. 2. Referring briefly to this drawing figure, a molten source material **28** is held within a crucible **30** having a nozzle **32.** The flow of molten source material **28** through nozzle **32** is regulated via the application of a controlled internal pressure, as represented by arrow **34.** This internal pressure can be mechanically applied by, for example, a plunger. In other embodiments, the internal pressure can be applied utilizing pressurized air or a different pressurized gas, such as argon (Ar) or another inert gas. The source material is maintained in a molten state utilizing a suitable heat input, such as a laser or electron beam similar to that utilized in electron beam vapor deposition processes. Alternatively, as indicated in FIG. 2, the desired heat input can be generated by at least one induction coil **36,** which is positioned around crucible **30.** When appropriately energized, induction coil **36** generates a variable magnetic field driving inductive heating within molten source material **28** (if having a sufficient iron (Fe) content or otherwise composed of a ferromagnetic material) and/or within a structure in contact with source material **28;** e.g., the walls of crucible **30** if composed of a ferromagnetic material. Induction coil **36** may be controlled to regulate the temperature of molten source material **28,** as desired, which may be monitored utilizing a non-illustrated temperature sensor.

Immediately following discharge through nozzle **32,** molten source material **28** contacts cooled wheel **38,** which is rotated at a relatively rapid rate. Wheel **38** is usefully cooled by active water flow or in another manner. As material **28** contacts the outer periphery of wheel **38,** molten source material **28** rapidly cools, solidifies, and is quickly cast from wheel **38** as a bulk NEA shape and, specifically, as a melt-spun ribbon **40.** The appearance and dimensions of melt-spun ribbon **40** will vary amongst embodiments; however, in many cases, melt-spun ribbon **40** may resemble a metallic foil and have a thickness ranging from about 0.5 to about 5 millimeters (mm) and, perhaps, from about 1 and about 2 mm. The width of ribbon **40** is somewhat arbitrary, but may range from about 10 to about 100 mm in an embodiment. In further embodiments, the thickness and/or width of ribbon **40** may vary with respect to the aforementioned ranges. Due to the relative thinness of melt-spun ribbon **40,** the cooled state of rotating wheel **38,** and the manner in which ribbon **40** is rapidly ejected from wheel **38,** exceptionally high cooling rates are achieved. Such cooling rates can approach or exceed approximately 1x10⁷ °C/s in many instances, which enables formation of melt-spun ribbon **40** as an NEA material having a desired metastable microstructure, as described herein. The temperatures to which molten source material **28** is heated and the rotational rate of wheel **38** will vary amongst embodiments of the planar flow casting process; however, by way of example, source material **28** may be heated to temperatures approaching or exceeding 1000°C in certain implementations, while wheel **38** may be rotated at a rate sufficient to cast-off ribbon **40** at a rate exceeding approximately 300 meters per second.

By virtue of the formulation of molten source material **28** and the rapid solidification thereof, melt-spun ribbon **40** is composed of an NEA material. As previously discussed, the NEA materials exist in metastable states and possess tailored microstructures, which are desirably preserved across all subsequently-performed stages of method **10.** The particular composition of the NEA material will vary amongst embodiments, as will the shape of the initially-produced bulk NEA material (here, melt-spun ribbon **40**). By definition, the NEA material contains at least one minority constituent or dispersoid (as defined by wt%) having a propensity, as predicted by established thermodynamic principals, to precipitate from the alloy matrix (as formed by the majority metallic constituent(s) of the NEA material) when the NEA material is heated above its particular critical temperature threshold (T_{CRITICAL}) for an extended time period; the term "extended" utilized in a relative sense, noting that a time period of several seconds may be considered "extended" in certain instances. In many cases, the NEA material will contain multiple minority constituents or dispersoids (e.g., silicides or carbides) distributed throughout the alloy matrix and prone to participate growth or agglomeration under such overtemperature conditions.

Further discussion will now be provided in which the NEA material is described as an Al-based NEA material; that is, an NEA material containing Al as its predominate constituent by wt%. Such Al-based NEA material can advantageously provide highly stable microstructure at elevated operating temperatures; e.g., temperatures exceeding 350°C and, in certain cases, at temperatures approaching or exceeding 425°C. Al-based NEA materials are consequently well-suited for usage in the production of aerospace and engine components including, for example, turbocharger components and components contained within GTEs. It is emphasized, however, that the following description is provided by way of non-limiting example only; and that the NEA material need not be composed of an Al-based alloy in all embodiments. For example, in further embodiment, the NEA material, may be composed of Ni-based alloy or superalloy. Furthermore, and more generally, the fabrication processes described in connection with method **10** (FIG. 1) are not limited to the production of any particular type of component or article of manufacture unless otherwise specified in the context of the appended Claims.

In an embodiments, molten source material **28** and melt-spun ribbon **40** shown in FIG. 2 may be composed of an Al-based NEA material. An Al-based NEA material may further contain lesser amounts of other metallic constituents, such as Fe, and/or other non-metallic constituents, such as silicon (Si), which precipitate from the Al-matrix if exposed to overtemperatures conditions. In this case, the Fe content may gradually precipitate from the Al-matrix and form undesired phases, such as Fe₃Al, within the NEA material. So too may the Si precipitate from the Al-matrix and contribute to needle-like dendritic growth within the Al-matrix. Once formed, such undesirable phases tend to grow or agglomerate and therefore worsen over time. In various embodiments, the Al-based NEA feedstock powder may contain between 85 wt% and 90 wt% Al, between 8 and 10 wt% Fe, between 1 wt% and 3 wt% Si, between 1 wt% and 2wt% vanadium (V), and lesser amounts of other metallic or non-metallic constituents, such as oxygen (O), zinc (Zn), titanium (Ti), chromium (Cr), and/or manganese (Mn). In such embodiments, T_{ALLOY_MP} may exceed T_{CRITICAL} by at least 100°C; e.g., T_{ALLOY_MP} may range from about 600°C to about 700°C, while T_{CRITICAL} may range from about 400°C to about 450°C. In one specific implementation, the Al-based NEA feedstock powder is composed, in whole or in substantial part, of an AA8009 aluminum alloy powder. In further embodiments, the NEA feedstock powder may be predominately composed of an Al-based alloy matrix or a Ni-based alloy matrix throughout which silicides, carbides, and/or other dispersoid strengtheners are distributed.

With continued reference to FIG. 1, method **10** next advances to STEP **14** during which the newly-produced solid NEA body or bulk shape (e.g., melt-spun ribbon **40** shown in FIG. 2) is mechanically processed or converted into feedstock powder of a desired particulate shape and size range. A non-exhaustive list of particle shapes includes oblong, rod- or whisker-like, platelet or laminae, and spherical shapes. To the extent practical, particle shape may be tailored for relatively low aerodynamic drag to optimize trajectory and velocity during the AM cold spray process carried-out during STEP **18** of method **40.** However, in many instances, particle shape may be largely dictated by the constraints of the mechanical processing techniques performed during STEP **14.** When melt-spun ribbon **40** is mechanically processed into smaller pieces utilizing chopping, grinding, and/or milling processes, the resulting pieces or particles will often have a platelet or flake-like form. The desired particle size range of the NEA feedstock powder will also vary amongst embodiments and may be selected based upon a number of competing criteria. Such competing criteria may include the parameters of the AM cold spray process, the capabilities of the cold spray apparatus, and the general desirability of maximizing particle velocity during cold spraying, while reducing reduce the propensity of the NEA feedstock material to explode and minimizing oxide content when the NEA feedstock material is prone to oxidation.

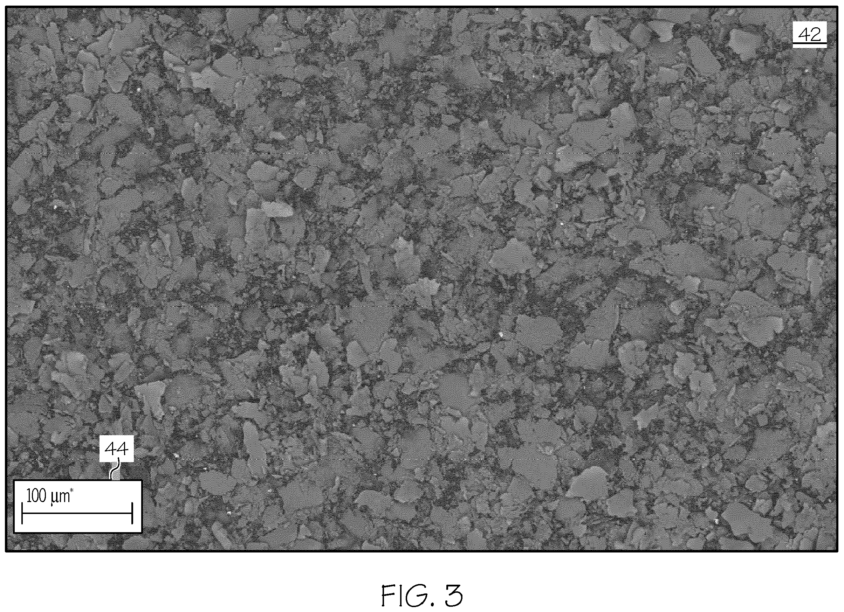

Generally, as the average particle size increases, so too does the oxide content within the cold spray-deposited NEA body due to an increase in the ratio of exposed surface area to volume of the powder particulates. Conversely, as the average particle size decreases, explosivity tends to increase, while (somewhat counter-intuitively) particle velocities tend to decrease during the cold spray process. To balance these competing factors, the bulk NEA body (e.g., melt-spun ribbon **40** shown in FIG. 2) may be converted into a powder form predominately or substantially exclusively possessing a particle size ranging from about 10 microns (µm) to about 140 µm and, preferably, from about 20 µm to about 90 µm in maximum dimension. Note the terms "predominately" or "substantially exclusively" are utilized here to indicate that a minor amount of smaller particles may remain within the NEA feedstock powder as such particles may be difficult to sieve or otherwise completely remove due to electrostatic attraction to larger particles. In one embodiment, the NEA feedstock powder produced pursuant to STEP **14** may contain or consist substantially entirely of flake-shaped particles ranging from approximately 10 µm to approximately 90 µm in maximum dimension. This may be appreciated by referring briefly to FIG. 3, which is an SEM image **42** of such flake-like particles or platelets with a legend **44** included for scale. SEM image **42** thus depicts a reduction to practice of NEA feedstock powder having a flake-like form factor and dimensions within the range specified above. In other embodiments, the NEA feedstock powder can posses different geometries and dimensions; and/or may be mixed with other powders or media to form a powder mixtures utilized during the below-described AM cold spray process.

Various different mechanical processing steps can be employed during STEP **14** to convert melt-spun ribbon **40** (FIG. 2) into a NEA feedstock powder having the desired particle shape and size range. As indicated above, mechanical processing steps for converting large pieces of material into smaller pieces of material include chopping, milling, grinding, and combinations thereof. Processes for selecting a desired particle size range include sieving, cyclonic separation, and the like. In one approach, melt-spun ribbon **40** (FIG. 2) is first converted into flake-like pieces utilizing a dry or wet chopping process. Sieving is then performed to remove undesirably large pieces or "overs" of the NEA material. Afterwards, attrition milling is carried-out to further reduce the size of the flake-like pieces thereby bringing the particles into closer conformance with the desired sized range. Such an attrition milling process is generally performed with an attritor unit, which utilizes a rod to aggressively stir the NEA material along with a milling media, such as steel spheres. Attrition milling can be carried-out in either a wet or dry state. Notably, attrition milling processes have been found to produce significantly higher yields than other milling process, such as a ball milling. After attrition milling, additional grinding steps and/or particle size selection steps can be performed, as needed. Furthermore, in certain cases, additional steps may be performed for particle-shaping purposes; e.g., to round the flake-like particles into more spherical shapes to decrease aerodynamic drag and instabilities during the subsequently-performed AM cold spray process. The end result may be NEA feedstock powder, such as that shown in FIG. 3, generally possessing a flake-shaped form factor and desired dimensions.

Next, at STEP **16** of method **10,** the NEA feedstock powder is annealed. Such an annealing process (herein, a "pre-spray anneal") is usefully performed to relieve material stress and any work hardening resulting from the mechanical processing steps performed during STEP **14** of method **10.** When performed, the pre-spray anneal may be carried-out in accordance with a pre-established heating schedule specific to the NEA material being processed. Generally, pre-spray annealing will entail heating the NEA feedstock powder to a maximum anneal temperature (T_{ANNEAL_MAX}) for a predetermined period of time on the order of, for example, approximately one hour. The pre-spray annealing process is controlled such that T_{ANNEAL_MAX} is less than T_{CRITICAL} throughout the annealing process. For example, in one embodiment in which T_{CRITICAL} ranges from 400°C to 450°C, T_{ANNEAL_MAX} may range from 350°C to 400°C. In another embodiment, T_{ANNEAL_MAX} may range between a minimum of T_{CRITICAL} minus about 150°C to a maximum of T_{CRITICAL} minus about 25°C or, perhaps, between a minimum of T_{CRITICAL} minus about 100°C to a maximum of T_{CRITICAL} minus about 50°C. By relieving materials stresses and possibly reducing work hardening (particularly in the case of feedstock powders prone to work hardening, such as Al-based NEA feedstock powders), the resulting NEA feedstock powder may be rendered more malleable to enhance adhesion and compaction during the subsequently-performed AM cold spray process. These benefits notwithstanding, the NEA feedstock powder need not be subject to pre-spray annealing in alternative embodiments of method **10.**

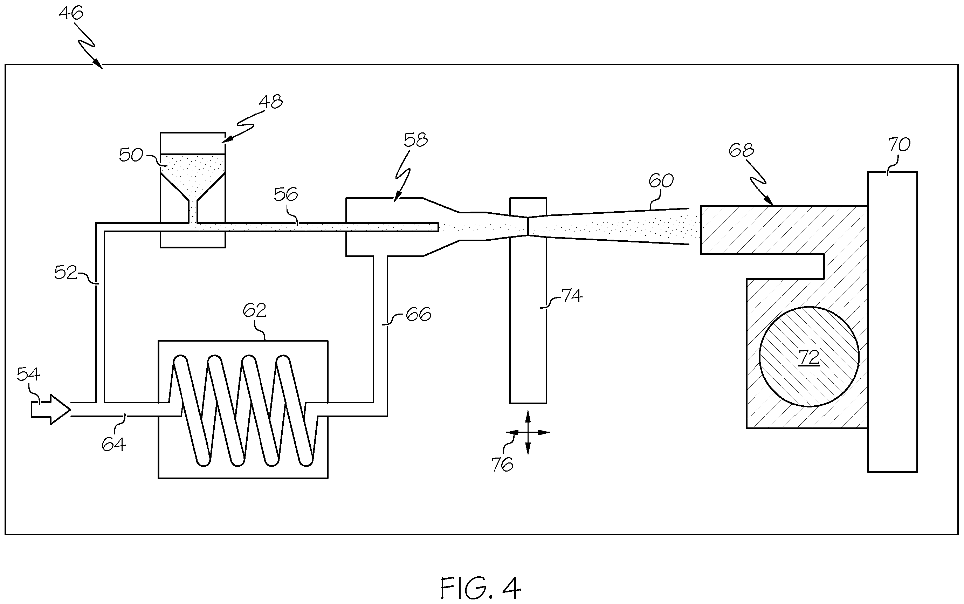

Following STEP **16** of method **10** and the completion of PROCESS BLOCK **24,** the NEA feedstock powder has now been produced. Utilizing the newly-produced NEA feedstock powder, an AM cold spray process can be carried-out to additively manufacture or three dimensionally print articles of manufacture having near-net shapes; that is, shapes encompassing and generally approximately the desired final geometries of the articles desirably produced pursuant to method **10.** An exemplary embodiment of a suitable AM cold spray process will now be described in conjunction with FIG. 4, which schematically illustrates a cold spray apparatus **46** suitable for performing STEP **18** of method **10.** Cold spray apparatus **46** includes a NEA feedstock powder supply **48,** such as a hopper containing NEA feedstock powder **50.** A first flow line **52** connects a source of pressurized carrier gas represented by arrow **54** to powder supply **48,** while a second flow line **56** connects powder supply **48** to a cold spray gun **58.** The carrier gas can be, for example, air, helium, nitrogen, or another gas that is preferably although non-essentially inert. During operation of cold spray apparatus **46,** the pressurized gas supplied by gas source **54** is delivered to powder supply **48,** metered amounts of the NEA feedstock powder are entrained in the gas stream, and the particle-entrained gas stream is delivered to gun **58** for discharge through nozzle **60.** Additional velocity and controlled thermal input is further imparted to the gas carrier stream and the entrained particles by preheating a portion of the gas supplied by gas source **54.** For example, as indicated in the lower left corner of FIG. 4, a fraction of the gas supply may be directed through a preheater unit **62** via flow line **64,** delivered to cold spray gun **58** via flow line **66,** and then mixed with the particle-entrained gas stream within gun **58** prior to or during discharge through nozzle **60.**

The process parameters governing the AM cold spray process will vary amongst embodiments, providing that the peak temperatures to which the NEA feedstock powder is heated are maintained below T_{CRITICAL} through the cold spray process. In this regard, the cold spray process may be performed such that the NEA feedstock powder is exposed to a maximum processing temperature of T_{SPRAY_MAX}, which is less than T_{CRITICAL} and may be at least 50°C less than T_{CRITICAL} in an embodiment. For completeness, it is noted that preheater unit **62** may heat the gas flow to temperatures exceeding T_{CRITICAL} in certain instances. Even when this is the case, however, the temperature of the NEA feedstock powder remains below T_{CRITICAL} as the powder particles are entrained in the carrier stream for an extremely brief time period, which prevents complete heat transfer from the carrier gas to the powder particles. Additionally, gas temperatures may decrease rapidly to levels below T_{CRITICAL} by the time the gas reaches cold spray gun **58** and contacts the feedstock powder. Gas temperature will also generally plummet upon discharge from nozzle **60** such that the cooling rate at nozzle **60** may approach or exceed the above-mentioned threshold (e.g., 1x10⁶ °C/s) in embodiments. Finally, while a certain amount of thermal input will be reintroduced into the NEA feedstock powder due to the conversion of kinetic energy when contacting the target surface or site-of-deposition, this secondary heating mechanism will also typically be insufficient to heat the NEA feedstock powder (or the resulting compacted body composed of the NEA material) to temperatures exceeding T_{CRITICAL}. Regarding the other process parameters of the AM cold spray process (e.g., deposition rates, particle discharge velocities, carrier gas types, chamber environment conditions, and the like), again such parameters will vary amongst embodiments. In one embodiment, helium is utilized as the carrier gas, which is supplied at a pressure approaching or exceeding approximately 700 pounds per square inch to impart the particles with high velocities and relatively straight trajectories when discharged from cold spray gun **58.**

As generically indicated on the right side of FIG. 4, the AM cold spray process may be utilized to gradually compile or build-up a near-net article **68** on a layer-by-layer basis. Near-net article **68** is generically illustrated in FIG. 4 in an arbitrary orientation and supported by a platform **70.** During the cold spray process, cold spray gun **58** is moved relative to near-net article **68** in some fashion, whether by movement of cold spray gun **58,** by movement of platform **70,** or a combination thereof. In one approach, as generically represented by block **74** and multidirectional arrow graphic **76** in FIG. 4, a computer-controlled robotic arm may be utilized to move cold spray gun **58** along all three orthogonal axis to deposit the NEA feedstock powder at selected locations and gradually build the desired part. The movement of cold spray gun **58** is dictated by computer-readable design data of any suitable file type, such as SLA extension-type files. In many embodiments, the part design data will assume the form of one or more Computer Aided Design (CAD) files, which may be generated by a part designer utilizing a commercially-available CAD program products. A non-exhaustive list of such commercially-available CAD program products includes TOPSOLID, CATIA, CREO, AUTODESK INVENTOR, SOLIDWORKS, and NX CAD software packages. Finally, if desired, one or more sacrificial structures **72** can be embedded in the near-net article **68** during the AM cold spray process; and subsequently removed to form lightening voids, internal cavities, flow passages, or the like within near-net article **68,** as discussed more fully below in conjunction with STEP **22** of method **10.**

When striking the target surface or site-of-deposition, kinetic energy of the particle impact induces plastic deformation of the cold spray-deposited NEA material to create the desired bond between layers of the deposited NEA feedstock powder. As indicated by the "cold spray," generally considered, the particles are applied at a temperature well below their melt point such that the kinetic energy of the particles on impact (rather than particle temperature) is the mechanism underlying plastic deformation and bonding of the particle with the target surface. Advantageously, AM cold spray processes are capable of relatively rapid deposition rates often exceeding 1 gram of material per second. As a result, the AM cold spray process carried-out at STEP **18** of method **10** may be capable of producing a part in a highly efficient manner; e.g., the cold spray process may be capable of producing a component of modest volume and complexity in several minutes, while a DMLS process may require several hours to fabricate a comparable component. Furthermore, as each layer of NEA feedstock powder is deposited by cold spray, the newly-applied layer tends to compact and thereby densify the previously-deposited NEA material layers. This, combined with the desirable properties of the NEA feedstock powder, enable the AM cold spray process to fabricate near-net articles having low porosities, which may be less than 1% and, perhaps, less than 0.5% by volume.

After completion of the AM cold spray process, additional process steps may be performed to transform the near-net article(s) into the finished article(s) of manufacture, as indicated in PROCESS BLOCK **26** of FIG. 1. For example, referring to STEP **20** of method **10,** a post-spray annealing process may be performed during which the near-net article is subject to elevated temperatures for a predetermined time period. The post-spray annealing process may be similar or substantially identical to the pre-spray annealing process performed during STEP **16** in implementations of method **10.** Accordingly, the near-net article may be heated to a maximum anneal temperature (T_{ANNEAL_MAX}) for a predetermined period of time on the order of an hour. The post-spray annealing process is controlled such that T_{ANNEAL_MAX} is less than T_{CRITICAL}; e.g., when T_{CRITICAL} ranges from 400°C to 450°C, T_{ANNEAL_MAX} may range from 350°C to 400°C in an embodiment. In other embodiments, the post-spray annealing process is controlled such T_{ANNEAL} is greater than ½ T_{CRITICAL} and less than T_{CRITICAL}. Such a post-spray annealing process can be performed to reduce the compression stress within the NEA material resulting from the cold spray process. Machining may then be performed during STEP **22** of method **10** to refine surface finishes, to bring final dimensions into close tolerance with design dimensions, and/or to define refined or detailed structure features of the finished article. By performing the post-spray annealing prior to such machining, undesired dimensional changes occurring after final machining can be minimized or entirely avoided.

Finally, if any sacrificial bodies or fugacious tooling structures are present within the near net article, such sacrificial tooling may be removed during STEP **22** of method **10.** Suitable removal techniques will depend upon the composition of the NEA article produced pursuant to method **10** as compared to the composition of the sacrificial structures. Generally, chemical dissolution (including acid leeching in the case of mild steels), breaking in the case of brittle (e.g., ceramic) materials, and Coefficient of Thermal Expansion (CTE) mismatch techniques can be employed. Collapsible and removable tooling can also be utilized to form desired internal voids, chambers, or flow passages within the additively-manufactured articles. For example, and referring briefly again to FIG. 4, sacrificial structure **72** can be removed from article **68** (e.g., by etching or chemical dissolution) to create a flow passage therethrough or a cavity therein. This may be beneficial in implementations in which the completed article assumes the form of a GTE component, such as a flowbody or actuator housing. For example, in one embodiment, the completed article may be realized as a valve flowbody through which a flow passage extends, as generically represented in FIG. 4. Thus, in such an embodiment, near-net article **68** can be processed during PROCESS BLOCK **26** to yield a GTE valve flowbody (or actuator housing) composed of an Al-based or Ni-based NEA material and having a flow passage extending therethrough. Embodiments of method **40** advantageously enable fabrication of such a GTE valve flowbody (or actuator housing) from materials having high stabilities at elevated temperatures exceeding 260°C and, perhaps, temperatures approaching or exceeding 350°C. In further embodiments, method **40** (and variations thereof) can be utilized to fabricate other types of aerospace components, including airborne valves and heat exchangers, as well as various other types of components or metallic articles subject to elevated temperatures during usage including engine components and turbomachine (e.g., turbocharger) components generally.

### CONCLUSION

There has thus been provided methods for the production of NEA feedstock powders of the type utilized in cold spray processes, as well as methods for fabricating articles utilizing such NEA feedstock powders and computer-controlled, AM cold spray processes. Embodiments of the above-described methods enable the production of completed parts with desirable NEA microstructures characterized by enhanced material strength, ductilities, low porosities, and other desirable properties. Embodiments of the below-described methods are well-suited for producing or fabricating components utilizing Al-based NEA feedstock powders, although by no means limited to such feedstock powders. Embodiments of the cold spray-based AM manufacturing processes described herein (when paired with the usage of the specialized NEA feedstock powders) can be utilized to produce components with such enhanced properties, while decreasing tooling requirements, in more abbreviated time periods (e.g., on the order of a few days), with fewer processing steps, at lower scrap volumes, and while easing article size constraints imposed by other conventional DED powder fusion processes. The end result is a vastly improved AM production process featuring cost and time savings, which are highly desirable with the aerospace industry and across other industries. Furthermore, parts or articles produced utilizing the AM cold spray processes described herein can be distinguished from other components utilizing known inspection techniques, such as photomicrographs of the NEA material structurer revealing splat boundaries created during the cold spray process.

In one embodiments, the above-described method includes the steps or processes of forming a molten alloy into a solid NEA body, such as an NEA ribbon or other bulk shape, utilizing a casting process having a cooling rate equal to or greater than approximately 1x10⁶ °C/s and, perhaps, cooling rate equal to or greater than 1x10⁷ °C/s. After casting, the solid NEA body is mechanically converted into a NEA feedstock powder. An annealing process is then performed during which the feedstock powder is exposed to a maximum anneal temperature (T_{ANNEAL_MAX}) for a predetermined time period. The NEA feedstock powder is composed of an alloy matrix having a melt point (T_{ALLOY_MP}) and throughout which a first minority constituent is dispersed or distributed. The first minority constituent precipitates from the alloy matrix when the NEA feedstock powder is exposed to temperatures exceeding a critical temperature threshold T_{CRITICAL} for a predetermined time period. The NEA body is formulated such that T_{CRITICAL} is less than T_{ALLOY_MP} and greater than T_{ANNEAL_MAX}. In certain embodiments, the NEA feedstock powder may be formulated such that the NEA feedstock powder is predominately composed of a first material by weight percent, the first material selected from the group consisting of aluminum and nickel; and the first minority constituent forms dispersoids within the NEA feedstock powder, the dispersoids selected from the group consisting of silicide dispersoids and carbide dispersoids.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

## Claims

1. A method (10), comprising:
obtaining (24) a Non-Equilibrium Alloy (NEA) feedstock powder (42, 50) composed of an alloy matrix and throughout which a first minority constituent is dispersed, the first minority constituent precipitating from the alloy matrix when the NEA feedstock powder (42, 50) is exposed to temperatures exceeding a critical temperature threshold (T_{CRITICAL}) for a predetermined time period;
utilizing (18) an Additive Manufacturing (AM) cold spray process to fabricate a near-net article (68) from the NEA feedstock powder (42, 50); and
further processing (26) the near-net article (68) to yield a finished article (68);
wherein the near-net article (68) is exposed to a maximum temperature (T_{SPRAY_MAX}) during the cold spray process; and
wherein T_{SPRAY_MAX} is maintained below T_{CRITICAL} to preserve, at least in substantial part, a non-equilibrium state of the NEA feedstock powder (42, 50) through the cold spray process.

2. The method (10) of claim 1 wherein T_{CRITICAL} is less than a melt point of the NEA feedstock powder (42, 50) and greater than 300 degrees Celsius.

3. The method (10) of claim 1 wherein further processing comprises:
subjecting the near-net article (68) to a post-spray annealing process (20) following the AM cold spray process; and
machining (22) selected surfaces of the near-net article (68) after the post-spray annealing process;
wherein, during the post-spray annealing and machining process steps (12), the near-net article (68) is exposed to maximum temperatures less than T_{CRITICAL}.

4. The method (10) of claim 3 wherein the near-net article (68) is exposed to a maximum annealing temperature (T_{ANNEAL}) during the post-spray annealing process; and
wherein T_{ANNEAL} is greater than ½ T_{CRITICAL} and less than T_{CRITICAL}.

5. The method (10) of claim 1 further comprising selecting the NEA feedstock powder (42, 50) such that:
the NEA feedstock powder (42, 50) is composed predominately of aluminum by weigh percent; and
the first minority constituent is selected from the group consisting of iron and silicon.

6. The method (10) of claim 1 further comprising selecting the NEA feedstock powder (42, 50) to contain, by weight percent:
between 85 and 90 aluminum;
between 8 and 10 percent iron;
between 1 and 3 percent silicon; and
between 1 and 2 percent vanadium.

7. The method (10) of claim 1 further comprising selecting the NEA feedstock to have a particle size ranging from approximately 10 to approximately 140 microns in maximum dimension.

8. The method (10) of claim 1 further comprising selecting the NEA feedstock powder (42, 50) to consist substantially entirely of flake-shaped particles ranging from approximately 10 microns to approximately 90 microns in maximum dimension.

9. The method (10) of claim 1 wherein the NEA feedstock powder (42, 50) is produced utilizing a process comprising:
forming (12) a molten alloy into a solid shape utilizing a casting process having a cooling rate equal to or greater than approximately 1x10⁶ degrees Celsius per second; and
mechanically converting (14) the solid shape into the NEA feedstock powder (42, 50).

10. The method (10) of claim 9 wherein forming (12) comprising forming the molten alloy into a ribbon (40) utilizing a planar flow casting process having a cooling rate equal to or greater than approximately 1x10⁷ degrees Celsius per second.

11. The method (10) of claim 9 wherein mechanically converting (14) comprises:
chopping the solid shape into flake-shaped pieces having an average size range; and
attrition milling the flake-shaped pieces to reduce an average size range thereof.

12. The method (10) of claim 9 wherein mechanically converting (14) comprises mechanically converting the solid NEA body into a NEA feedstock powder (42, 50) consisting substantially entirely of flake-shaped particles ranging from approximately 10 microns to approximately 90 microns in maximum dimension.

13. The method (10) of claim 1 wherein the NEA feedstock particles are subjected to a pre-spray anneal process (16) having a maximum anneal temperature (T_{ANNEAL_MAX}) prior to the AM cold spray process; and
wherein T_{ANNEAL_MAX} is less than T_{CRITICAL}.

14. The method (10) of claim 1 wherein the finished article (68) comprises a gas turbine engine component;
wherein, during the AM cold spray process, the NEA feedstock powder (42, 50) is deposited around a sacrificial structure (72); and
wherein further processing comprises removing the sacrificial structure (72) to create a flow passage through the gas turbine engine component.

15. The method (10) of claim 1 further comprising formulating the NEA feedstock powder (42, 50) such that:
the NEA feedstock powder (42, 50) is predominately composed of a first material (28) by weight percent, the first material (28) selected from the group consisting of aluminum and nickel; and
the first minority constituent forms dispersoids within the NEA feedstock powder (42, 50), the dispersoids selected from the group consisting of silicide dispersoids and carbide dispersoids.
